# EUROPEAN PATENT SPECIFICATION

(11) **EP 3 458 996 B1**
(45) Date of publication and mention of the grant of the patent: **13.07.2022**
(21) Application number: 17729197.8
(22) Date of filing: 11.05.2017
(51) Int. Cl.: G06F 21/32, G06F 21/34, G06Q 50/26, G06F 21/16, G06Q 90/00, H04W 12/30

(54) **METHOD OF DIGITIZATION AND ACQUISITION OF SENSITIVE DATA ON MOBILE DEVICES THAT ENSURES THE SAFETY AND INTEGRITY OF THE DATA**
VERFAHREN ZUR DIGITALISIERUNG UND ERFASSUNG VON EMPFINDLICHEN DATEN AUF MOBILEN VORRICHTUNGEN ZUR SICHERSTELLUNG DER SICHERHEIT UND INTEGRITÄT DER DATEN
PROCÉDÉ DE NUMÉRISATION ET D'ACQUISITION DE DONNÉES SENSIBLES SUR DES DISPOSITIFS MOBILES ASSURANT LA SÉCURITÉ ET L'INTÉGRITÉ DES DONNÉES

(30) Priority: 16.05.2016 IT UA20163456
(43) Date of publication of application: 27.03.2019
(73) Proprietor: Pievani, Achille, Adrara San Martino (BG) (IT); Lavelli, Gabriele, Foresto Sparso (BG) (IT); Muratori, Lorenzo, Capriolo (BS) (IT); Vegini, Luca, Viadanica (BG) (IT)
(72) Inventor: Pievani, Achille, Adrara San Martino (BG) (IT); Lavelli, Gabriele, Foresto Sparso (BG) (IT); Muratori, Lorenzo, Capriolo (BS) (IT); Vegini, Luca, Viadanica (BG) (IT)
(74) Representative: Bruni, Giovanni
(86) International application number: PCT/IB2017/052755
(87) International publication number: WO 2017/199138

(56) References cited:
- US-A1- 2003 023 858
- US-A1- 2004 209 597
- US-A1- 2005 193 198
- US-A1- 2010 325 424
- US-A1- 2016 019 548
- US-A1- 2016 087 971

## Description

### Technical field

The present invention relates to a method for digitizing and capturing sensitive data on electronic devices, in particular on smartphones or tablets. The present invention also relates to a method of information security for privacy protection to ensure the integrity of individual data acquired, confidential personal information, and to facilitate the creation, use and safe access to this information from a public or private network, through portable electronic devices.

### Background art

As is well known, methods and software for digitizing documents and standard information that solve document retrieval and document retrieval issues are widely widespread and commonly used. Also widely used are methods to ensure the confidentiality and integrity of the data.

For example, document No. WO02/06948 describes a method for creating, storing and displaying personal data and confidential information using portable electronic devices, while document TW201520806 concerns a system for identity authentication for a mobile device, which includes a plurality of software for exchanging information connected to the host. That system includes a form to verify the identity of the person by means of a verification code. Therefore, the invention has the advantage of reducing the risk of frauds and making digital business cards and other data.

Document US2016/0087971 A1 discloses a method and a system for generating identification and certification of e-licenses includes the use of software, applications and mobile devices such as smartphones. It is designed to issue and manage all kinds of permits, e-licenses or other documents intended for identification and certification of specific documents and permits in any defined area. However this method does not allow a one-to-one relationship between users and competent authorities.

Document US2005/193198 A1 discloses a unique authentication number issued to individuals for facilitating the interaction with governments and other entities. This unique authentication number is generated using physical and/or logical identification factors, which include a serial number of a device (e.g. the IMEI)

### Summary of the invention

Aim of the present invention is to provide a method for digitizing sensitive data on a mobile device of a user, such as a smartphone or tablet. The method is fast and efficient, at the same time guarantees the security and integrity of the same and is not present in the state of the art.

The method of digitizing sensitive data object of the present invention is designed to optimize the digitization of any type of document and ensure the security and integrity of such data.

According to the present invention, a method for digitizing sensitive data on electronic devices that guarantees the security and integrity of the data itself is defined by the features set forth in the attached independent claim.

Further embodiments of the invention, preferred and/or particularly advantageous, are described in accordance with the features disclosed in the enclosed dependent claims.

### Brief description of the drawings

Certain preferred embodiments of the invention, but without any limitation, are described below, with reference to the accompanying drawings, in which:

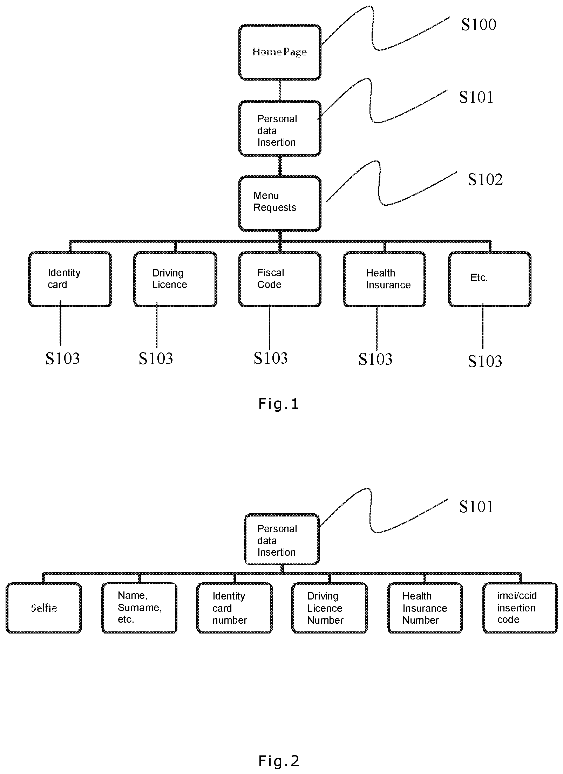

- Figure 1 is a flow-chart of a method of digitization and acquisition of sensitive data on mobile devices according to the present invention;
- Figure 2 is a flow-chart of the detail of the insertion of personal data;

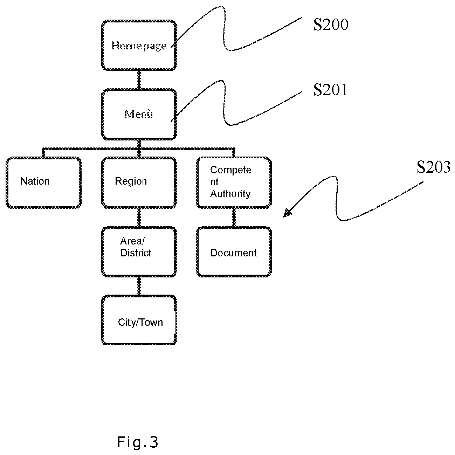

- Figure 3 is a flow-chart of the method for managing the request of documents from the user to the responsible authorities.

### Detailed description

The method for digitizing and capturing sensitive data on mobile devices that ensures the security and integrity of the data itself, comprises the steps of:
a. downloading the software application by means of a user registration via its own electronic device;
b. creating a password to ensure the security of the application access;
c. entering data S101: name and surname, tax code, e-mail address, selfie, identity card number, license number (for the purpose of obtaining this certified document on your smartphone), health card (for the purposes of obtaining this certified document on your mobile device) and entering the imei/iccid alphanumeric code;
d. generating a user-mobile alphanumeric code (compulsorily connected to each other) unique and unrepeatable.

The phase c. can also include optional fingerprint insertion, iris or facial recognition, and the entry of any other document useful to obtain a certified document on your mobile device.

Once the mobile device is replaced or its Sim is blocked after lost or stolen, this application will have to be downloaded again by the user and a new alphanumeric imei/iccid code will be generated replacing the previous one.

Following the installation of the software application and the allocation of the alphanumeric code according to the steps a. - c., the method is also configured to allow the users to:
1) request S102 to the competent authorities the certified documents by sending the request from their mobile device with the identification of the alphanumeric identifier code directly from the software application to a special software installed at the competent authority.
2) obtain S103 on their mobile phone, in a special folder of the software application, always at the disposal of the user, the certified documents that can be uploaded to the mobile device only and exclusively by the competent authority directly from the software on the user application.

In addition, the competent authority will advantageously receive S200 on the appropriate software a request and the alphanumeric code from the mobile device of the user. This request will already be complete with all the applicant's information, including selfie. The software used by the authority, equipped with customizable menu S201, allows to process the request, retrieve the requested data and document that can be retrieved from appropriate national or regional or provincial or communal database S203 and, always by means of the software, send the certified document with the relevant alphanumeric code to the applicant's mobile device. This document, saved by the user on the application folder, may be considered valid for any legal effect and may be sent by the mobile device by e-mail, bluetooth or any other telematic mode to public and private offices, and displayed directly from the mobile device to the official public who so requests.

Advantageously, the software connected to the application will be developed as a single software nationwide to meet any possible document request.

Even more advantageously, each authority can access only and exclusively its own competent department and will have a preloaded list of all national cities/towns. In addition, each document sent to the user will have its associated alphanumeric identifier, so that the document is valid and official. The user can then send the same document by e-mail to the relevant office or to the store from which he has been requested.

A national server available to national agencies, hoteliers, shopkeepers, banks, etc., can be used to verify personal identity only by entering the personal alphanumeric code.

Finally, it will be possible to create a dedicated website linking to the national server containing the profile of each user to verify the personal identity (there are no associated documents because they are on the electronic device) by entering the associated alphanumeric code to verify the actual validity and authenticity of such document.

A software application, implementing the method according to the present invention, can be organized as follows:
- At least a registration module
- At least a document request module

The registration module includes a first display mask requiring the personal data of the user to be registered: first and last name, date of birth, place of birth, identity card number, phone number, fiscal code and so on.

In a second display mask, the registration module will ask for a selfie and/or a fingerprint. After that, a pin code generation is required.

All the above data will be sent to a suitable server and a receipt of a successful registration will be received by the user.

The document request module is organized with a home page and a main menu:
- available documents
- document request
- document elimination

The available documents are the ones a user can ask to different competent authorities. As an example, city offices, department of motor vehicles, sanitary presidia, banks, and so on.

From these authorities the documents which can be request are, for instance: identity card, birth certificate, family status declaration from the city offices; driving licenses, boat license and so on from the department of motor vehicles; certificate of good health, health book, health insurance card from the sanitary presidia; account balance, loan, mortgage etc. from the bank.

It is understood that the invention is not limited to the embodiments described and illustrated here, which are to be considered as examples of the assembly and of the processes for assembling it; those skilled in the art will understand that it is possible to make various changes as regards shapes, sizes, constructive and functional details and configuration of the elements described in the exemplary embodiment, without departing from the scope of the invention as defined in the appended claims and their equivalents.

## Claims

1. Method of digitization and acquisition of sensitive data on mobile devices that ensures the security and integrity of the data, the method comprising the steps of:
a. downloading a software application by means of a user registration via a mobile device;
b. creating a password to ensure the security of the software application access;
c. inserting in said software application the data: name, social security number, email address, selfie, identity card number, driving license number, health card number and entering the imei/iccid alphanumeric code;
d. generating by means of said software application and the inserted data an alphanumeric identification code of a user-mobile device;
e. requiring to a competent authority a certified document, by sending a request from the mobile device, together with the alphanumeric identification code, directly from the software application to a special software installed before the competent authority;
f. getting on the mobile device, in a specific folder, the certified document always available to the user, wherein the certified document obtained by the competent authority comprises the alphanumeric identification code.

2. Method according to claim 1, further comprising in the step c. the addition of the fingerprint, iris or facial recognition, and the placement of all needed documents to obtain a certificate document on the mobile device.

3. Method according to claim 1 or 2, **characterized in that** said competent authority processes the request, retrieves the data and the document requested by the software application, and the alphanumeric identification code.

4. Software application implementing the method according to any of the preceding claims, wherein the software application comprises at least a registration module and a document request module.

## Patentansprüche

1. Verfahren zur Digitalisierung und Erfassung sensibler Daten auf mobilen Geräten, das die Sicherheit und Integrität der Daten garantiert, umfassend folgende Schritte:
a. Herunterladen einer Softwareanwendung mittels einer Benutzerregistrierung über ein mobiles Gerät;
b. Erstellen einer Passwort, um die Sicherheit des Zugriffs auf die Softwareanwendung zu gewährleisten;
c. Eingeben in die Softwareanwendung von folgenden Daten: Name, Sozialversicherungsnummer, E-Mail-Adresse, Selfie, Personalausweisnummer, Führerscheinnummer, Gesundheitskartennummer, zusammen mit der Eingabe der imei/iccd alphanumerischen Code;
d. Erstellen eines alphanumerischen Identifikationscodes eines Mobilgeräts eines Benutzers mittels der Softwareanwendung und der eingegebenen Daten;
e. Anfordern eines beglaubigten Dokuments von einer zuständigen Behörde, indem eine Anfrage vom mobilen Gerät zusammen mit dem alphanumerischen Identifikationscode direkt von der Softwareanwendung an eine spezielle Software gesendet wird, die bei der zuständigen Behörde installiert ist;
f. Erhalten auf dem mobilen Gerät in einem speziellen Archiv des für den Benutzer immer verfügbaren beglaubigten Dokuments, in dem das von der zuständigen Behörde erhaltene beglaubigte Dokument den alphanumerischen Identifikationscode enthält.

2. Verfahren nach Anspruch 1, ferner umfassend in Schritt c. das Hinzufügen des Fingerabdrucks, einer Iris- oder Gesichtserkennung und das Anordnen aller erforderlichen Dokumente, um ein zertifiziertes Dokument auf dem mobilen Gerät zu erhalten.

3. Verfahren nach Anspruch 1 oder 2, **dadurch gekennzeichnet, dass** die zuständige Behörde die Anfrage bearbeitet und die angeforderten Daten und Dokumente durch die Anwendung der Software und den alphanumerischen Identifikationscode abruft.

4. Softwareanwendung, umfassend das Verfahren nach einem der vorhergehenden Ansprüche, wobei die Softwareanwendung mindestens ein Registrierungsformular und ein Dokumentationsanforderungsformular umfasst.

## Revendications

1. Méthode de numérisation et d'acquisition des données sensibles sur des appareils mobiles, qui garantit la sécurité et l'intégrité des données, la méthode comprenant les opérations:
à. télécharger une application logicielle au moyen d'un enregistrement d'utilisateur par un appareil mobile;
b. créer un mot de passe afin d'assurer la sécurité d'accès à l'application logicielle;
c. insérer les données dans ladite application logicielle: nom, numéro d'assurance sociale, adresse e-mail, selfie, numéro de carte d'identité, numéro de permis de conduire, numéro de carte santé, en introduisant le code alphanumérique imei/iccd ;
d. générer un code d'identification alphanumérique du dispositif mobile d'un utilisateur au moyen de ladite application logicielle et des données insérées;
e. demander un document certifié à une autorité compétente, en envoyant une demande depuis l'appareil mobile, accompagnée du code d'identification alphanumérique, directement depuis l'application logicielle, à un logiciel spécial installé auprès de l'autorité compétente ;
f. recevoir sur l'appareil mobile, dans une archive spécifique, le document certifié toujours disponible pour l'utilisateur, dans lequel le document certifié obtenu auprès de l'autorité compétente comprend le code d'identification alphanumérique.

2. Procédé selon la revendication 1, comprenant en outre dans l'opération c. l'ajout de l'empreinte digitale, d'une reconnaissance d'iris ou faciale, et la disposition de tous les documents nécessaires pour obtenir un document certifié sur l'appareil mobile.

3. Procédé selon la revendication 1 ou 2, **caractérisé en ce que** ladite autorité compétente traite la demande, récupère les données et documents demandés par l'application du logiciel, et le code alphanumérique d'identification.

4. Application logicielle, comprenant le procédé selon l'une quelconque des revendications précédentes, dans laquelle l'application logicielle comprend au moins un formulaire d'inscription et un formulaire de demande de documentation.
